**Europäisches Patentamt**

**(19) European Patent Office**

**Office européen des brevets**

**(11) Publication number : 0 296 244 B1**

# EUROPEAN PATENT SPECIFICATION

(45) Date of publication of patent specification :
15.01.92 Bulletin 92/03

(51) Int. Cl.⁵ : **G01D 7/00,** G12B 11/00,
G03H 1/00, B60K 35/00

(21) Application number : 88901734.9

(22) Date of filing : 20.11.87

(86) International application number :
PCT/US87/03021

(87) International publication number :
**WO 88/05157 14.07.88 Gazette 88/15**

(54) 3-D HOLOGRAPHIC ELECTROMECHANICAL METER.

(30) Priority : 06.01.87 US 791

(43) Date of publication of application :
28.12.88 Bulletin 88/52

(45) Publication of the grant of the patent :
15.01.92 Bulletin 92/03

(84) Designated Contracting States :
DE FR GB IT SE

(56) References cited :
WO-A-86/05269
US-A- 3 560 921
US-A- 3 633 988

(73) Proprietor : Hughes Aircraft Company
7200 Hughes Terrace P.O. Box 45066
Los Angeles, California 90045-0066 (US)

(72) Inventor : MOSS, Gaylord, E.
4300 Via Dolce 217
Marina del Rey, CA 90292 (US)

(74) Representative : KUHNEN, WACKER &
PARTNER
Alois-Steinecker-Strasse 22 Postfach 1553
W-8050 Freising (DE)

## Description

The subject invention relates to displays and, more particularly, to a holographic display which creates a virtual image representing a meter. This application is a co-pending European Patent Application with 88 900 623.5.

Conventional electromechanical dial instruments provide a method for an observer to assimilate information rapidly without reading a number by glancing at the coarse position of an indicator needle. Persons whose eyes cannot accommodate to near distances have difficulty reading such instruments. In addition, the time required to assimilate information from such instruments, while relatively rapid, still involves an outside-distant to inside-instrument viewing accommodation delay.

At least one prior art automobile instrument display has mounted a tachometer outside the front fender of an automobile at some distance from the driver. While this system provided a distant image, it was subject to criticism as being too small, too expensive and subject to obstruction by rain or snow.

In the past, holographic technics have been employed for imaging dial instruments, scales and displays to viewer's eyes. Several kinds of optics have been used for such purposes dependent on the special problem to be solved and compensating for the well-knwon accompanying optical problems. Although imaging of a digital display is relatively easy to accomplish, additional problems will arise by imaging dial instruments including scales and pointers.

One of said additional problems is the parallax error caused by the effect that the plane of an imaged scale is not coplanar with the image plane of the rotating pointers. In WO-A-86 05 269 it is therefore suggested to provide a dial instrument comprising two components (pointers) which are movable with respect to each other in conjunction with a scale. The dial instrument consists of two holograms, one for providing an image of the scale and one for providing an image of the rotating pointers. The image is generated by an appropriate illumination of the holograms and by rotating the hologram forming the image of the pointers with respect to the hologram forming the scale. The afore described dial instrument compensates for parallax errors by further providing adjusting means adjusting the relative distance from one hologram to the other, thereby reducing the parallax error between the image of the scale and the image of the pointers.

However, a further problem being encountered in the imaging of rotable holograms is not mentioned in the WO-A-86 05 269.

Provided that the illumination source of the hologram is spaced at an off-axis position, the rotation of the hologram would yield not only to a rotation of the pointer image, but also to a displacement of the pointer image with respect to the optical axis. If the pointer image is imaged together with an image of a scale which is, in turn, not rotated, a misalignment of the pointer image with respect to the scale image would be the result.

It is therefore the object of the present invention to provide a holographic meter which provides improved operation compared to conventional holographic meters.

This object is solved by a holographic meter in accordance with claim 1.

In more detail, according to the present invention an electromechanical meter is made to appear as a virtual image at a distance without additional collimating optics by physically rotating a first hologram in relation to a second so that the first hologram generates a fixed reference background and the second hologram generates a moving positional indicator on the fixed reference background. The rotatable hologram is preferably moved by a shaft or by other mechanical elements associated with conventional transducers, for example, as used in automotive instruments. Further, a converter hologram is positioned so as to receive the illumination of illuminating means and so as to provide a radially symmetric illumination wavefront as reconstruction beam to said first and second hologram. The invention permits modification of current automotive instruments at moderate cost so that they can be read by farsighted individuals.

The just summarized invention will now be described in detail in conjunction with the drawings of which:

FIG. 1 is a pictorial illustration of a meter configuration according to the preferred embodiment;

FIG. 2 is a schematic diagram of a meter according to a preferred embodiment;

FIG. 3 is a schematic diagram illustrating distortion of a holographically generated pointer by off-axis illumination;

FIG. 4 is a schematic diagram illustrating a wavefront converter hologram;

FIG. 5 is a schematic perspective diagram illustrating the construction of a wavefront converter hologram;

FIG. 6 is a schematic diagram illustrating use of a master hologram; and

FIG. 7 is a schematic diagram of the hologram of FIG. 5 perpendicular to the optical axis.

The following description is provided to enable any person skilled in the optical and automotive fields to make and use the invention, and sets forth the best modes contemplated by the inventor of carrying out his invention. Various modifications, however, will remain readily apparent to those skilled in the art since the general principles of the present invention have been defined herein specifically to provide a relatively economical and easily manufactured holographic electromechanical meter.

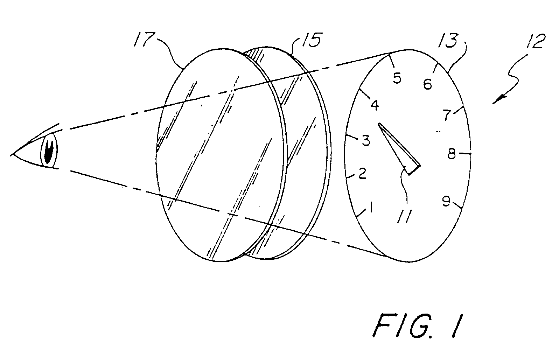

FIG. 1 discloses a hologram arrangement for creating a virtual image 12 of an electromechanical meter including a rotating pointer 11 on a dial face 13. The virtual meter image 12 is created by a dial face hologram 15 and a rotating pointer hologram 17.

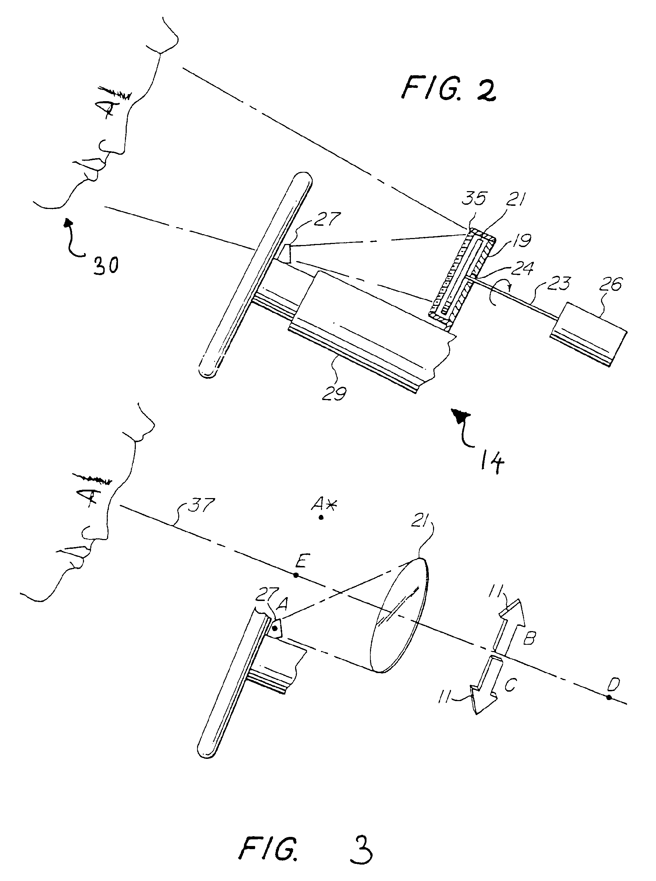

FIG. 2 illustrates the preferred embodiment of a holographic meter 14 in an automobile. A first fixed holographic disc 19 creates the image of the meter face 13. The meter face 13 may include indicia of a parameter of vehicle operation, for example, vehicle speed or fuel consumption. A second rotating holographic disc 21 provides the rotating pointer 11. The shaft 23 normally used for the mechanical pointer of, for example, an automobile speedometer or tachometer, extends through an opening 24 in the fixed disc 19 and is fixedly attached to the rotating disc 21. The shaft 23 is driven by a suitable transducer 26, as conventionally used in automobiles, in order to pivot or rotate the disc 21. Various other rotating mechanisms are possible including stepping motors and suitable gearing mechanisms.

The holographic discs 19, 21 are illuminated by a suitable illuminator source 27 attached to the steering column 29 of the automobile. A virtual image 12 of a pointer 11 on a dial face 13 is thereby created on the side of the discs 19, 21 opposite the viewer 30.

Holographic procedures for forming holograms such as holograms 19, 21 can be found in known reference works, such as "Optical Holography" by Collier et al., Academic Press, New York, N.Y. (1971). If desired, the holographic image can be developed to be particularly sensitive to only a predetermined bandwith of the illumination source. As is well known in the holographic field, the hologram can be made to operate over a broader wavelength band giving increased brightness for a broadband source, but trading off increased coloration provides a lower photo-optic see-through capability. Finally, a holographic converter disc 35 is inserted between the off-axis illumination source 27 and the rotating holographic disc 21. The converter disk 35 is designed to provide a radially symmetrical illumination wavefront to the holographic discs 19, 21 to create a more accurate virtual image 12. The utility of such an off-axis source will now be discussed in conjunction with FIG.3.

As shown in FIG. 3, when the illumination comes from an illumination source 27 located off the optical axis 37, such as at "A", the pointer image 11 can change with rotation. If the pointer 11 is rotated 180 degrees, for example, the effect would be the same as moving the illumination source to "A*". The effect on the image could be a movement of the pointer 11 from a point touching the axis 37, as at "B", to a position spaced away from the axis 37, as at "C". At position "C", the pointer 11 no longer properly aligns with a fixed holographic dial face 13. Also, the pointer image would be very dim because it is now generated by a light source that is not at the reference beam angle. The pointer image movement might be small enough to tolerate in an "in-plane" hologram, but would become more severe for the deep holograms needed to provide far-sighted eye compensation. The apparent solution to the problem is to illuminate the hologram with an on-axis source, as at points "D" or "E".

However, placing the illumination source on-axis at points "D" or "E", creates other problems. For a reflection hologram, the source blocks the view of the hologram. For a transmission hologram, the undiffracted light shines directly back into the eyes of the viewer.

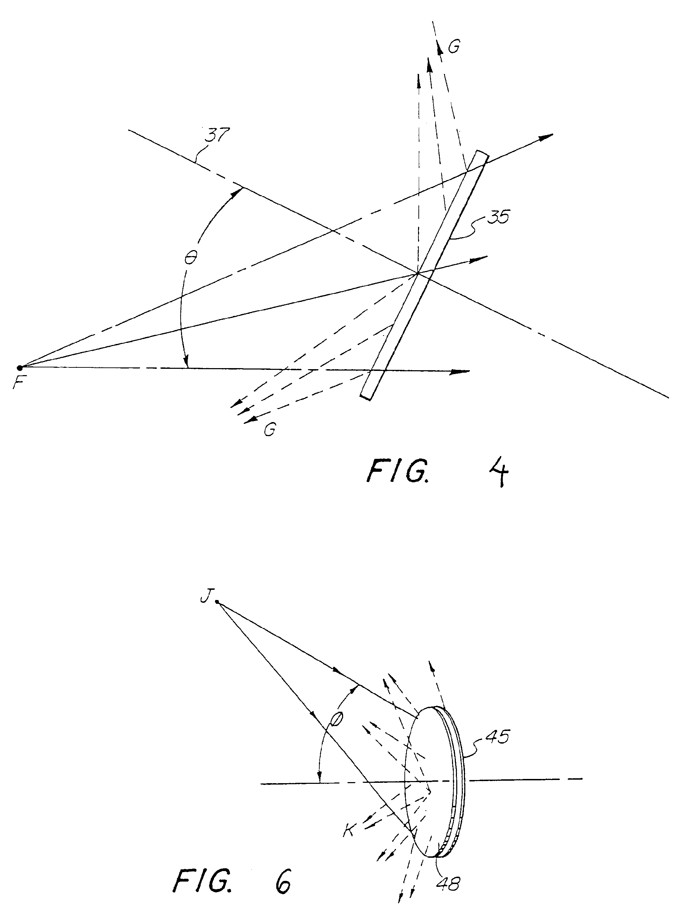

Improved operation which avoids distortion arid viewer interference employs the fixed converter hologram 35 to modify off-axis illumination to create a radially symmetric wavefront for illuminating the on-axis holograms 19, 21. One embodiment of a converter hologram 35 is shown in FIG. 4 where the light from on off-axis source "F" is converted to the rays of a radially symmetric wavefront "G." The off-axis illumination source "F" is located at an angle $\theta$ to the optical axis 37. As will be discussed in more detail, the converter hologram 35 contains a recorded interference pattern, preferably recorded in pie-shaped segments, which creates the radially symmetric wavefront. While the converter hologram 35 shown provides a reflected radially symmetric wavefront, a converter hologram for providing a transmitted radially symmetric wavefront, such as illustrated in FIG. 2, may be readily constructed according to the technique hereafter described.

The construction of the converter hologram 35 is illustrated in FIG. 5. According to FIG. 5, a hologram recording plate 45 is sandwiched by a dual mask 40 providing first and second pie-shaped openings 47, 49. The openings 47, 49 are oppositely disposed and in common alignment. The recording plate 45 is rotated while the dual mask 40 remains stationary such that a series of congruent pie-shaped areas $a_1$, $a_2$, ... $a_n$ are successively exposed to the two construction wavefronts 31, 33.

The two wavefronts 31, 33 compromise the wavefront 31 from a reference point source "H", and a radially symmetric wavefront 33 from a source "J". The point source "H" is positioned at an angle $\phi$ to the optical axis 37 equal to the angle $\theta$ between the off-axis illumination source "F" and the optical axis 37 (FIG. 4).

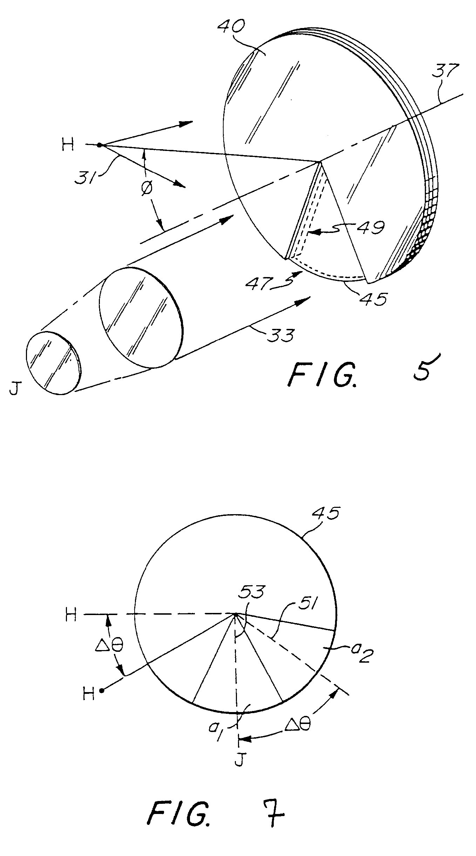

As shown more particularly in FIG. 7, prior to exposing the second pie segment $a_2$, the point source "H" is rotated by an angle $\Delta\theta$ such that the second pie segment $a_2$ receives the rays from the point source "H" at the same angle as it would if the mask were removed from the unrotated recording plate and the point source H held fixed at its original position. The angle $\Delta\theta$ is the angle between the respective bisectors 51, 53 of the equal size pie segments $a_1$, $a_2$.

The pie segment technique is useful in that it is difficult to provide a radially symmetric source "J" over a large area of the recording plate 45. While lines are created at the edges of the adjacent pie segments, these do not impair performance in the applications under consideration. The technique can be used to create a reflection converter hologram such as that shown in FIG. 4 by locating the radially symmetric source "J" on the opposite side of the recording plate from the point source "H" and conducting the same successive exposure procedure.

In order to produce converter holograms 35 with low cost and high rate, only a master hologram 45 is exposed by the successive segment method of FIG. 5. The master 45 is then used to produce low cost copies in the same manner as low cost point-of-sale scanner holograms are now manufactured. This technique is illustrated in FIG. 6 where a reference beam J impinges on a hologram master 45 located behind a hologram recording plate 48. In response to the reference beam, the master 45 generates a radially symmetric object beam over the full surface of the recording plate 48.

It is possible to generate a radially symmetric wavefront by the use of conventional optical elements in those cases where space allows the use of auxiliary optics to shape the wavefronts. Compared to conventional optics, however, the converter hologram has the advantages of requiring less space, weight and cost.

## Claims

1. A holographic meter (14) for displaying the value of a measurement unit of a parameter comprising:

a fixed hologram means (15; 19) for creating a virtual image reference background (13) in response to incident illumination;

a rotatable hologram means (17; 21) for creating a rotatable indicator (11) on said reference background (13) in response to incident illumination;

means (27) for illuminating said fixed hologram means (15; 19) and rotatable hologram means (17; 21) to provide said incident illumination;

and means for rotating (23; 26) said rotatable hologram in response to said value, characterized by further comprising:

a converter hologram means (35; 45) for receiving the illumination of said means (27) for illuminating and providing a radially symmetric illumination wavefront (G) to said fixed hologram means (15; 19) and said rotatable hologram means (17; 21).

2. The holographic meter (14) of claim 1 wherein said parameter is a parameter of motor vehicle operation.

3. The holographic meter (14) of claim 2 wherein said means for rotating (23; 26) includes a shaft means (23) attached to said rotatable hologram means (17; 21).

4. The holographic meter (14) of claim 3 wherein said means (27) for illuminating includes an off-axis light source (27).

5. The holographic meter (14) of claim 4 wherein said light source (27) is attached to the steering mechanism (29) of a motor vehicle.

6. The holographic meter (14) of anyone of the preceding claims, wherein said fixed hologram means (15; 19) provides a virtual image of a dial face (13) having indicia of scale thereon in response to incident illumination;

said rotatable hologram means (17; 21) is creating a virtual image of a pointer (11) on said dial face (13) for pointing to a selected one of said indicia in response to incident illumination; and

said means for rotating (23; 26) are rotating said rotatable hologram means (17; 21) in proportion to variation of a parameter of operation related to said indicia.

## Patentansprüche

1. Holographisches Meßgerät (14) für die anzeige des Wertes einer Meßeinheit eines Parameters, mit:

einer festen Hologrammvorrichtung (15; 19) zur Erzeugung eines virtuellen Bildreferenzhintergrundes (13) in antwort auf einfallende Beleuchtung;

einer routierbaren Hologrammvorrichtung (17; 21) zur Erzeugung einer routierbaren anzeige (11) auf dem Referenzhintergrund (13) in antwort auf einfallende Beleuchtung;

Vorrichtungen (27) zum Beleuchten der festen Hologrammvorrichtung (15; 19) und der routierbaren Hologrammvorrichtung (17; 21), um die einfallende Beleuchtung zu erzeugen; und

Vorrichtungen zum Routieren (23; 26) des routierbaren Hologramms in Antwort auf den Wert, gekennzeichnet durch

eine Konverterhologrammvorrichtung (35; 45), um die Beleuchtung der Beleuchtungsvorrichtung (27) zu empfangen und zum Bereitstellen einer radialsymmetrischen Beleuchtungswellenfront (G) für die feste Hologrammvorrichtung (15; 19) und die routierbare Hologrammvorrichtung (17; 21).

2. Holographisches Meßgerät (14) nach Anspruch 1, worin der Parameter ein Parameter eines Kraftfahrzeugbetriebszustandes ist.

3. Holographisches Meßgerät (14) nach Anspruch 2, worin die Vorrichtungen zum Routieren (23; 26) eine Schaftvorrichtung (23) umfassen, die an der routierbaren Hologrammvorrichtung (17; 21) befestigt ist.

4. Holographisches Meßgerät (14) nach Anspruch 3, worin die Beleuchtungsvorrichtungen (27) eine "Off-Axis"-Lichtquelle (27) umfassen.

5. Holographisches Meßgerät (14) nach Anspruch 4, worin die Lichtquelle (27) mit dem Steuermechanismus (29) eines Kraftfahrzeuges verbunden ist.

6. Holographisches Meßgerät (14) nach einem der vorherigen Ansprüche, worin die feste Hologrammvorrichtung (15; 19) ein virtuelles Bild einer Wählscheibe (13) bereitstellt, welche in Antwort auf einfallende Beleuchtung eine Anzeige einer Skalierung auf sich aufweist;

wobei die routierbare Hologrammvorrichtung (17; 21) ein virtuelles Bild eines Zeigers (11) auf der Wählscheibe (13) erzeugt, um in Antwort auf die einfallende Beleuchtung auf einen ausgewählten Wert der Anzeige zu zeigen; und

wobei die Vorrichtungen zum Routieren (23; 26) die routierbare Hologrammvorrichtung (17; 21) proportional zu der Variation eines Betriebsparameters routieren, welcher mit der Anzeige in Zusammenhang steht.

**Revendications**

1. Instrument de mesure holographique (14) destiné à afficher la valeur d'une unité de mesure d'un paramètre comportant :

un moyen à hologramme fixe (15 ; 19) destiné à créer un arrière-plan de référence (13) en image virtuelle en réponse à un éclairage incident ;

un moyen à hologramme tournant (17 ; 21) destiné à créer un indicateur tournant (11) sur ledit arrière-plan de référence (13) en réponse à un éclairage incident ;

un moyen (27) destiné à éclairer ledit moyen à hologramme fixe (15 ; 19) et ledit moyen à hologramme tournant (17 ; 21) pour produire ledit éclairage incident ;

et un moyen (23 ; 26) destiné à faire tourner ledit hologramme tournant en réponse à ladite valeur, caractérisé en ce qu'il comporte en outre :

un moyen à hologramme convertisseur (35 ; 45) destiné à recevoir l'éclairage dudit moyen (27) d'éclairage et à produire un front d'onde d'eclairage radialement symétrique (G) pour ledit moyen à hologramme fixe (15 ; 19) et ledit moyen à hologramme tournant (17 ; 21).

2. Instrument de mesure holographique (14) selon la revendication 1, dans lequel ledit paramètre est un paramètre du fonctionnement d'un vehicule à moteur.

3. Instrument de mesure holographique (14) selon la revendication 2, dans lequel ledit moyen de rotation (23 ; 26) comprend un moyen à arbre (23) relié audit moyen à hologramme tournant (17 ; 21).

4. Instrument de mesure holographique (14) selon la revendication 3, dans lequel ledit moyen (27) d'éclairage comprend une source désaxée (27) de lumière.

5. Instrument de mesure holographique (14) selon la revendication 4, dans lequel ladite source (27) de lumière est reliée au mécanisme de direction (29) d'un véhicule à moteur.

6. Instrument de mesure holographique (14) selon l'une quelconque des revendications précédentes, dans lequel ledit moyen à hologramme fixe (15 ; 19) produit une image virtuelle d'une face de cadran (13) portant des repères d'une échelle en réponse à un éclairage incident ;

ledit moyen à hologramme tournant (17 ; 21) crée une image virtuelle d'une aiguille (11) sur ladite face de cadran (13) pour la diriger sur l'un, choisi, desdits repères en réponse à un éclairage incident ; et

ledit moyen (23 ; 26) destiné à faire tourner, fait tourner ledit moyen à hologramme tournant (17 ; 21) proportionnellement à une variation d'un paramètre de fonctionnement lié auxdits repères.

FIG. 1

FIG. 2

FIG. 3

FIG. 4

FIG. 6

*FIG. 5*

*FIG. 7*